# EUROPÄISCHE PATENTSCHRIFT

(11) **EP 1 003 963 B1**
(45) Veröffentlichungstag und Bekanntmachung des Hinweises auf die Patenterteilung: **19.06.2002**
(21) Anmeldenummer: 98931927.2
(22) Anmeldetag: 16.04.1998
(51) Int. Cl.: F02M 37/10, F02M 37/22

(54) **FÖRDERAGGREGAT**
SUPPLY UNIT
GROUPE D'ALIMENTATION

(30) Priorität: 14.08.1997 DE 19735272; 07.03.1998 DE 19809919
(43) Veröffentlichungstag der Anmeldung: 31.05.2000
(73) Patentinhaber: ROBERT BOSCH GMBH, 70442 Stuttgart (DE)
(72) Erfinder: SCHELHAS, Peter, D-70329 Stuttgart (DE); SCHMIEDER, Dietmar, D-71706 Markgroeningen (DE); STROHL, Willi, D-71717 Beilstein (DE); GERHARD, Albert, D-71732 Tamm (DE)
(86) Internationale Anmeldenummer: DE9801067
(87) Internationale Veröffentlichungsnummer: WO9909312

(56) Entgegenhaltungen:
- EP-A- 0 705 971
- EP-A- 0 754 483
- DE-A- 4 414 281
- DE-A- 4 444 854
- DE-A- 19 534 411

## Beschreibung

### Stand der Technik

Die Erfindung betrifft ein Förderaggregat zum Fördern von Kraftstoff aus einem Vorratstank, insbesondere für Brennkraftmaschinen, der im Oberbegriff des Anspruchs 1 definierten Gattung.

Bei einem als sog. Tankeinbaueinheit bezeichneten, bekannten Förderaggregat dieser Art (DE 44 44 854 A1) ist der elektrische Antriebsmotor der Förderpumpe mit seinem zylindrischen Außenmantel paßgenau in der Zentralkammer des Filtertopfes aufgenommen und stützt sich stirnseitig einerseits an einem Anschlagbund am vom Antriebsmotor separierten Pumpengehäuse und andererseits an elastischen Abstützelementen auf der Unterseite des Filterdeckels ab. Der Pumpenauslaß mündet in der Zentralkammer, von wo aus der angesaugte Kraftstoff über den mit einem Rückschlagventil versehenen Zulaufkanal in die Ringkammer strömt, dort den Hauptfilter durchfließt und über den Ablaufkanal in die Förderleitung gelangt. Ein das Ende des Ablaufkanals bildender Ablaufstutzen am Filterdeckel ist über ein flexibles Wellrohr mit einem in einem Tankflansch angeordneten Anschlußstutzen für die Förderleitung verbunden. Der Tankflansch verschließt die im Vorratstank vorgesehene Öffnung zum Einbau des Förderaggregats. Der Filtertopf ist im Vorratstank axial und radial unverschieblich festgelegt, wozu zwischen dem Filtertopf und der Innenwand des Vorratstanks elastische Ankoppelelemente und eine Sicherung gegen axiales Verschieben vorgesehen sind. Wegen der elastischen Ankopplung des Filtertopfes an den Vorratstank ist es auch unbedingt erforderlich, daß die Verbindungsleitung zwischen dem Ablaufstutzen am Filterdeckel und dem Anschlußstutzen am Tankflansch elastisch ausgebildet ist. Bei einem ebenfalls bekannten Förderaggregat (DE 37 30 930 A1) ist die mit einem Saugstutzen in einen Saugraum hineinragende Förderpumpe seitlich in ein im Längsschnitt C-förmiges Gehäuse eingesetzt und zwischen den beiden Gehäuseschenkeln axial und radial abgestützt. Im Gehäuse ist ein Speicherraum für von der Brennkraftmaschine rückströmenden Kraftstoff vorgesehen, in den eine den Kraftstoff rückleitende Rücklaufleitung mündet. Der Saugraum steht über eine erste Saugraumöffnung mit dem Innern des Vorratstanks und über eine zweite Saugraumöffnung mit dem Speicherraum in Verbindung. Beide Saugraumöffnungen sind in einander gegenüberliegenden Wandabschnitten des Saugraums eingebracht und werden von einem im Saugraum angeordneten Ventilglied wechselweise freigegeben und verschlossen. Das Ventilglied wird von einem Schwimmer betätigt und verschließt bei gefülltem Saugraum die zweite Saugraumöffnung und gibt die erste Saugraumöffnung frei. Sinkt das Kraftstoffniveau im Saugraum unterhalb eines vorgegebenen Kraftstoffniveaus ab, das aber noch oberhalb des Mündungsendes des Saugstutzens der Förderpumpe liegt, so gibt infolge des mit dem Kraftstoffniveau sinkenden Schwimmers das Ventilglied die zweite Saugraumöffnung frei und verschließt die erste Saugraumöffnung. Damit kann Kraftstoff aus dem Speicherraum in den Saugraum fließen, wodurch eine ungestörte Weiterförderung von Kraftstoff durch die Förderpumpe sichergestellt ist.

Ferner ist aus der DE 44 14 281 A1 ein Förderaggregat zum Fördern von Kraftstoff aus einem Vorratstank bekannt, das einen Filtertopf mit einer Zentralkammer aufweist, die von einer Ringkammer umschlossen ist. Die Ringkammer ist an einer ihrer Stirnseiten von einem Filterdeckel verschlossen, wobei an diesem Filterdeckel ein Zulaufkanal und ein Ablaufkanal zu beziehungsweise von der Ringkammer ausgebildet sind. In der Zentralkammer ist eine elektrische Kraftstofförderpumpe angeordnet, deren Einlaß über einen Saugstutzen in einen Saugraum hineinragt.

Der Durchmesser der Zentralkammer stimmt mit dem des Förderaggregats überein, zudem ist der Saugstutzen unmittelbar im Filtertopf aufgenommen.

Um die Übertragung von Schwingungen des Förderaggregats auf den Vorratsbehälter zu vermeiden, stützt sich der Filtertopf über eine Feder am Boden des Vorratsbehälters ab. Dies ist relativ aufwendig und kann bezüglich der Übertragung von Betriebsgeräuschen nach außen nicht bei allen Anwendungsfällen zufriedenstellen.

Die der Erfindung zugrundeliegende Aufgabe besteht darin, ein Förderaggregat vorzuschlagen, bei dem die Förderpumpe aus Geräuschgründen vom Filtertopf abgekoppelt ist, so daß dieser starr im Vorratstank befestigbar ist. Diese Aufgabe wird von einem Gegenstand mit den Merkmalen des Anspruchs 1 gelöst. Bei diesem Gegenstand ist der lichte Durchmesser der Zentralkammer größer, als der Außendurchmesser des Gehäuses der Förderpumpe. Mögliche Kontaktstellen dieser Förderpumpe mit dem Filtertopf bestehen demnach nur noch im Bereich des Saug- und Druckstutzens. Um auch an diesen Stellen eine Abkoppelung zu erreichen, liegen zwischen diesen Stutzen und dem Filtertopf Hülsen aus elastischem Material ein. Der mit dem Druckstutzen gekoppelte Zulaufkanal des Filtertopfs ist zudem an einer Aufsteckkappe des Filterdeckels ausgebildet, die den Druckstutzen übergreift.

### Vorteile der Erfindung

Das erfindungsgemäße Förderaggregat mit den Merkmalen des Anspruchs 1 hat demnach den Vorteil, daß das Gehäuse der elektromotorischen Förderpumpe vom Filtertopf abgekoppelt ist. Die Förderpumpe ist an den beiden Stirnseiten ihres auch den Elektromotor aufnehmenden Gehäuses axial und radial elastisch gelagert und kann damit ihre Schwingbewegung beim Betrieb nicht auf den Filtertopf übertragen, so daß letzterer im Vorratstank starr befestigt werden kann. Das flexible Wellrohr zwischen Filterdeckel und Tankflansch kann damit entfallen, so daß die mit ihm verbundenen Dichtheitsund Festigkeitsprobleme verschwinden. Die Montage des Förderaggregats ist wesentlich vereinfacht, da die Förderpumpe lediglich mit ihrem Saugstutzen durch die Öffnung im Topfboden des Filtertopfes hindurchgesteckt und der Filtertopf mit dem Filterdeckel verschlossen werden muß, nachdem zuvor auf Saugstutzen und Druckstutzen jeweils die elastische Hülse aufgeschoben worden ist. Mit dem Aufsetzen des Filterdeckels übergreift automatisch die am Filterdeckel ausgebildete Aufsteckkappe den Druckstutzen bzw. die dort aufgesetzte elastische Hülse, so daß die Förderpumpe automatisch im Innern der Zentralkammer mit Abstand von der inneren Ringwand der Ringkammer festgelegt ist. Die beiden gummielastischen Hülsen dienen dabei zur Abdichtung, Lagerung und Geräuschabkopplung der Förderpumpe im Filtertopf. Durch die in den weiteren Ansprüchen aufgeführten Maßnahmen sind vorteilhafte Weiterbildungen und Verbesserungen des im Anspruch 1 angegebenen Förderaggregats möglich. Gemäß einer ... bevorzugten Ausführungsform der Erfindung weist der Filterdeckel einen an seiner Unterseite axial vorstehenden ringförmigen Schließkragen mit einer der lichten Weite der Ringkammer entsprechenden Radialbreite auf, der stirnseitig in die Ringkammer unter Zwischenlage jeweils einer Ringdichtung zur inneren und äußeren Ringkammerwand eingesetzt und mit dem Filtertopf, vorzugsweise durch Umbördelung der inneren und äußeren Ringwand, fest verbunden ist. Die im Filterdeckel ausgebildeten Kanäle für den Kraftstoffzu- und -ablauf münden in der die Ringkammer abdeckenden Schließfläche des Schließkragens. Vorzugsweise sind an der Unterseite des Schließkragens Abstützelemente axial vorstehend angeformt, die sich an dem Hauptfilter abstützen und diesen damit axial unverschieblich in der Ringkammer festlegen. Gemäß einer vorteilhaften Ausführungsform der Erfindung ist der Filterdeckel im Bereich der Zentralkammer offen ausgebildet oder weist zumindest eine Zugangsöffnung zu dieser sowie einen zylindrischen Wandbereich auf, der an der vom Filtertopf abgekehrten Stirnseite des Filterdeckels ausgebildet ist und eine kreisförmige Anschlußöffnung für einen eine Einsetzöffnung für das Förderaggregat im Vorratstank verschließenden Tankflansch umgrenzt. Durch diese konstruktive Maßnahme wird das in den Vorratstank eingesetzte Förderaggregat automatisch beim Schließen der Einsetzöffnung durch den Tankflansch im Vorratstank axial und radial festgespannt. Das erfindungsgemäße Förderaggregat mit den kennzeichnenden Merkmalen des Anspruchs 11 hat den Vorteil, daß durch den unmittelbaren Anschluß des Pumpenauslasses der Förderpumpe über deren Druckstutzen an den im Filterdeckel ausgebildeten Zulaufkanal zur Ringkammer im Filtertopf und die Einführung der Kraftstoff-Rücklaufleitung unmittelbar in den Filtertopf die Zentralkammer im Filtertopf stets mit Kraftstoff gefüllt ist, so daß bei Absinken des Kraftstoffspiegels in dem unterhalb des Filtertopfes angeordneten Saugraum durch Öffnen des Sperrglieds der Saugraum aus der Zentralkammer mit Kraftstoff nachgefüllt wird und die Förderpumpe über ihren Saugstutzen nach wie vor ungestört Kraftstoff fördert. Ein solches vorübergehendes Absinken des Kraftstoffspiegels im Saugraum tritt bei niedrigem Füllstand im Vorratstank auf, wenn das Fahrzeug sich infolge Kurvenfahrten seitlich neigt. Dann läuft der Saugraum bei durch das Sperrglied verschlossener zweiter Saugraumöffnung über die erste Saugraumöffnung leer und der Saugstutzen würde aus dem Kraftstoffvolumen austauchen, wenn nicht erfindungsgemäß durch Abfallen des Sperrglieds Kraftstoff aus der Zentralkammer nachfließen würde. Damit erhält das Förderaggregat ein deutlich besseres Kurvenverhalten bei minimalem Füllstand im Vorratstank. Durch die Nutzung der Zentralkammer des Filtertopfes als Speicherraum für den rückfließenden Kraftstoff wird eine kostengünstig herstellbare und kompakte Tankbaueinheit geschaffen, deren Montage problemlos einfach und kostensparend ist.

Um beispielsweise beim Abstellen des Fahrzeugs am Berg trotz eines eventuellen Abströmens des Kraftstoffs aus dem Saugraum in den Vorratstank, was mit einem Entfall der Auftriebskraft für das Sperrglied und damit dem Verlust seiner Sperrfunktion einhergeht, dennoch die Freigabe der zweiten Saugraumöffnung zu verhindern, wird in einem zweiten Ausführungsbeispiel vorgeschlagen, das Sperrglied mit einer hydraulisch steuerbaren Anpreßvorrichtung zu versehen. Diese Anpreßvorrichtung ist lediglich im Ruhezustand der Förderpumpe wirksam, im Förderbetrieb ist ihre Funktion aufgrund eines von der Förderpumpe erzeugten Hydraulikdrucks aufgehoben. Durch diese Maßnahme ist selbst unter Extrembedingungen eine ausreichende Versorgung der Förderpumpe mit Kraftstoff sichergestellt.

Durch die Kombination des erfindungsgemäßen Förderaggregats mit den kennzeichnenden Merkmalen des Anspruchs 1 und des erfindungsgemäßen Förderaggregats mit den kennzeichnenden Merkmalen des Anspruchs 11 gemäß einer bevorzugten Ausführungsform nach Anspruch 10 werden die getrennt vorhandenen Vorteile nicht nur vereinigt, sondern auch eine Einsparung doppelt vorhandener Bauteile und damit eine Kostensenkung erreicht. Ein Vorratstank mit einer Einsetzöffnung für das erfindungsgemäße Förderaggregat und einem die Einsetzöffnung verschließenden Tankflansch ist in den Ansprüchen 17 und 18 angegeben.

### Zeichnung

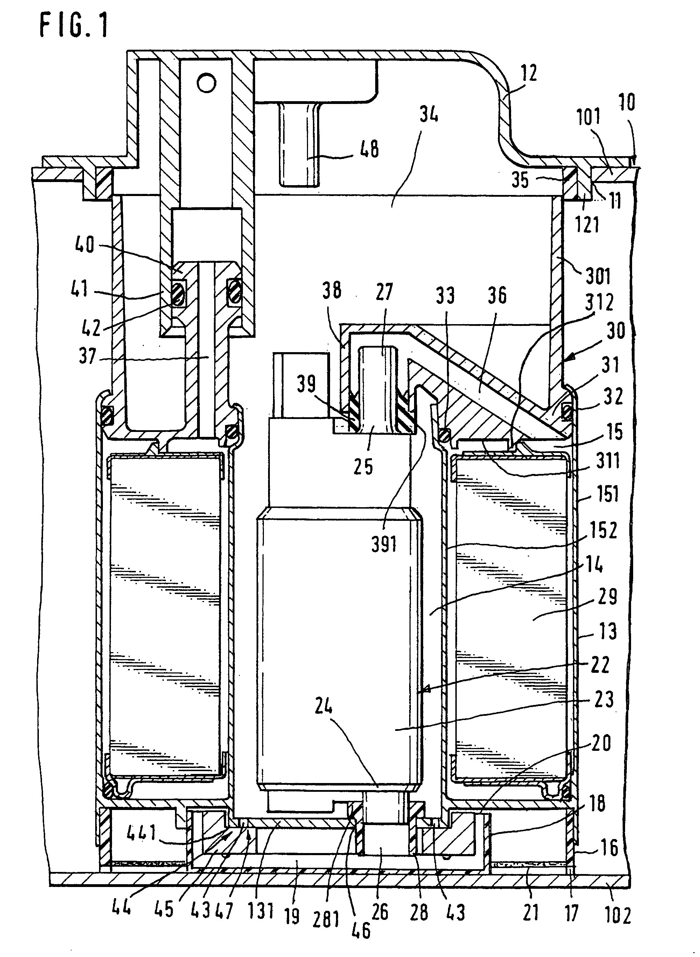

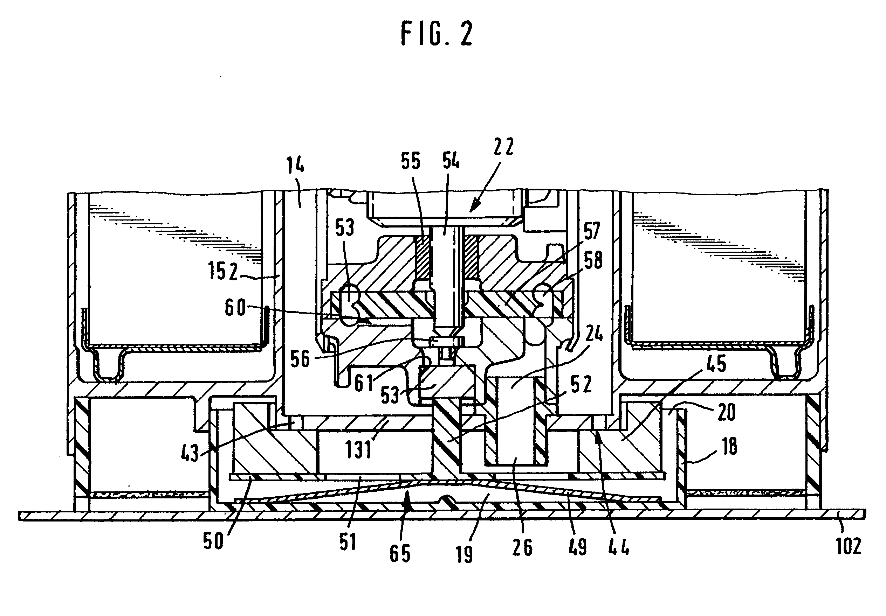

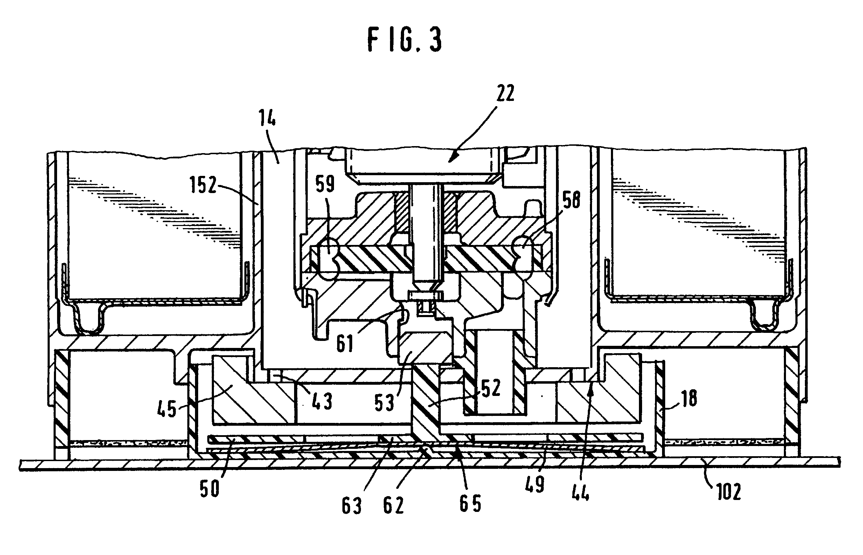

Die Erfindung ist anhand der in der Zeichnung dargestellten Ausführungsbeispiele in der nachfolgenden Beschreibung näher erläutert. Dabei zeigt die Figur 1 einen Längsschnitt eines Förderaggregats zum Fördern von Kraftstoff aus einem Kraftstoff-Vorratstank. Die Figuren 2 und 3 zeigen ein zweites Ausführungsbeispiel der Erfindung im Längsschnitt. Der dem Tankboden zugewandte Abschnitt des Förderaggregats nach Figur 1 ist dazu in Figur 2 im Stillstand und in Figur 3 im Förderbetrieb der Kraftstoffpumpe dargestellt.

### Beschreibung der Ausführungsbeispiele

Das in der Figur 1 im Längsschnitt dargestellte Förderaggregat zum Fördern von Kraftstoff aus einem Kraftstoff-Vorratstank 10 zu einer hier nicht dargestellten Brennkraftmaschine ist im Innern des hier nur ausschnittweise im Längsschnitt dargestellten Vorratstanks 10 angeordnet. Hierzu weist der Vorratstank 10 eine in seiner oberen Tankwand 101 angeordnete Einsetzöffung 11 auf, die nach Einsetzen des Förderaggregats von einem Tankflansch 12 hermetisch verschlossen wird. Das Förderaggregat ist dabei auf dem Tankboden 102 des Vorratstanks 10 aufgesetzt und durch den Tankflansch 12 axial und radial unverschieblich fixiert. Das Förderaggregat weist einen Filtertopf 13 mit einer Zentralkammer 14 und einer diese umschließenden Ringkammer 15 auf. Die äußere, die Topfwand des Filtertopfes 13 bildende Ringkammerwand ist mit 151 und die die Zentralkammer 14 umschließende innere Ringkammerwand mit 152 bezeichnet. An der Unterseite des Filtertopfes 13 ist ein ringförmiger Aufsetzstutzen 16 angeordnet, der auf dem Tankboden 102 des Vorratstanks 10 aufsitzt und in seiner Stutzenwand nahe dem Tankboden 102 radiale Einströmöffnungen 17 für den Kraftstoff aus dem Vorratstank 10 aufweist. Im Innern des Aufsetzstutzens 16 ist mittels einer von unten auf den Topfboden 131 aufgesetzten dosenartigen Kappe 18 ein Saugraum 19 ausgebildet, der über eine nahe dem Topfboden 131 liegende erste Saugraumöffnung 20 mit dem Innern des Aufsetzstutzens 16 in Verbindung steht. Der zwischen der Kappe 18 und der Innenwand des Aufsetzstutzens 16 verbleibende Ringraum ist oberhalb der Einströmöffnungen 17 mit einem einen Vorfilter darstellenden Filtergewebe 21 überdeckt.

In die Zentralkammer 14 ist eine elektromotorische Förderpumpe 22 eingesetzt, die ein Gehäuse 23 mit einem Pumpeneinlaß 24 und einem Pumpenauslaß 25 aufweist, in dem sowohl die Pumpenkammer mit Pumpenrad als auch der elektrische Antriebsmotor integriert ist. Der lichte Durchmesser der Zentralkammer 14 ist dabei größer bemessen als der Außendurchmesser des Gehäuses 23, so daß zwischen innerer Ringkammerwand 152 und der Förderpumpe 22 ein großer ringförmiger Radialspalt verbleibt. Der Pumpeneinlaß 24 steht mit einem an der einen Stirnseite des Gehäuses 23 axial vorstehenden Saugstutzen 26 und der Pumpenauslaß 25 mit einem an der gegenüberliegenden Stirnseite des Gehäuses 23 axial vorstehenden Druckstutzen 27 in Verbindung. Der Saugstutzen 26 ragt durch eine im Boden 131 des Filtertopfes 13 vorgesehene Öffnung 46 hindurch in den darunterliegenden Saugraum 19. Dabei ist auf den Saugstutzen 26 eine Hülse 28 aus elastischem Material, z.B. Gummi, aufgeschoben, die an ihrem an der Stirnseite des Gehäuses 23 anliegenden Ende einen radial überstehenden, einstückigen Stirnflansch 281 trägt. Die Hülse 28 füllt den Zwischenraum zwischen dem die Öffnung 46 umschließenden Rand im Topfboden 131 und dem Außenmantel des Saugstutzens 26 aus, während der Stirnflansch 281 sich zwischen der Innenseite des Topfbodens 131 und der Stirnseite des Gehäuses 23 abstützt. Die Hülse 28 mit Stirnflansch 281 dient der Abdichtung, Lagerung und Geräuschabkopplung des Saugstutzens 26 und damit der Förderpumpe 22 im Filtertopf 13. Nach Einsetzen eines ringförmigen Hauptfilters 29 in die Ringkammer 15 ist auf den Filtertopf 13 ein Filterdeckel 30 aufgesetzt. Der Filterdeckel 30 weist an seiner dem Filtertopf 13 zugekehrten Unterseite einen axial vorstehenden, ringförmigen Schließkragen 31 mit einer der lichten Weite der Ringkammer 15 entsprechenden Radialbreite auf. Mit dem Schließkragen 31 ist der Filterdeckel 30 in die Ringkammer 15 eingesetzt, wobei die auf der Unterseite des Schließkragens 31 ausgebildete Schließfläche 311 die gesamte obere, lichte Ringfläche der Ringkammer 15 überdeckt und mit einem an ihr ausgebildeten, axial vorstehenden, umlaufenden Abstützelement 312 auf den Hauptfilter 29 drückt, so daß dieser gegen Axialverschiebung in der Ringkammer 15 festgelegt ist. Zwischen dem ringförmigen Schließkragen 31 und der äußeren und inneren Ringkammerwand 151,152 ist jeweils eine Ringdichtung 32 bzw. 33 eingelegt. Der Filterdeckel 30 ist dann durch Umbördelung der äußeren und inneren Ringkammerwand 151 und 152 auf den Schließkragen 31 fest mit dem Filtertopf 13 verbunden. Der Filterdeckel 30 ist im Bereich der Zentralkammer 14 offen ausgebildet und weist an seiner vom Filtertopf 13 abgekehrten Stirnseite einen zylindrischen Wandbereich 301 auf, der eine kreisförmige Anschlußöffnung 34 des Filterdeckels 30 zum Anschluß an den Tankflansch 12 umgrenzt. Der Tankflansch 12 trägt hierzu an seiner dem Filterdeckel 30 zugekehrten Unterseite einen Verschlußstutzen 121, der den zylindrischen Wandbereich 301 übergreift. Zwischen dem zylindrischen Wandbereich 301 und dem Verschlußstutzen 121 ist eine Dichtung 35 eingelegt. Im Filterdeckel 30 ist ein Zulaufkanal 36 zur Ringkammer 15 sowie ein Ablaufkanal 37 von der Ringkammer 15 ausgebildet, die beide in der Schließfläche 311 des Schließkragens 31 münden. Dem Zulaufkanal 36 ist eingangsseitig eine im Filterdeckel 30 einstückig ausgebildete Aufsteckkappe 38 vorgeordnet, die so ausgebildet und angeordnet ist, daß sie beim Aufsetzen des Filterdeckels 30 auf den Filtertopf 13 den Druckstutzen 27 der Förderpumpe 22 mit Radialabstand übergreift. Wie auf den Saugstutzen 26 ist auch auf den Druckstutzen 27 der Förderpumpe 22 eine Hülse 39 aus elastischem Material, z.B. Gummi, aufgesteckt, die an ihrem dem Gehäuse 23 der Förderpumpe 22 zugekehrten Ende einen radial überstehenden Stirnflansch 391 trägt. Die Hülse 39 füllt den Zwischenraum zwischen dem Außenmantel des Druckstutzens 27 und der Innenwand der Aufsteckkappe 38 aus und stützt sich mit ihrem Stirnflansch 391 zwischen der Stirnseite des Gehäuses 23 und der ringförmigen Stirnseite der Aufsteckkappe 38 ab. Ebenso wie die Hülse 28 mit Stirnflansch 281 dient die Hülse 39 mit Stirnflansch 391 der Abdichtung, Lagerung und Geräuschabkopplung des Druckstutzens 27 und damit der Förderpumpe 22 an oder von dem Filtertopf 13 bzw. dem mit dem Filtertopf 13 fest verbundenen Filterdeckel 30. Am Ende des Ablaufkanals 37 ist am Filterdeckel 30 ein Ablaufstutzen 40 ausgebildet, über den sich beim Einsetzen des Tankflansches 12 in die Einsetzöffnung 11 im Vorratstank 10 ein steifes Anschlußrohr 41 schiebt. Durch eine O-Dichtung 42 ist die Dichtheit zwischen Ablaufstutzen 40 und Anschlußrohr 41 hergestellt. Das Anschlußrohr 41 steht mit einem hier nicht dargestellten, am Tankflansch 12 angeformten Anschlußstutzen für eine Förderleitung zur Brennkraftmaschine in Verbindung. Außerdem ist am Tankflansch 12 ein weiterer, ebenfalls nicht dargestellter Anschlußstutzen für eine Kraftstoff-Rücklaufleitung angeformt, über welche in der Brennkraftmaschine nicht verbrauchter Kraftstoff in den Vorratstank 10 zurückfließt. Dieser Anschlußstutzen für die Rücklaufleitung steht mit einem zum Filterdeckel 30 hin frei mündenden Einlaufrohr 48 im Tankflansch 12 in Verbindung, so daß der über die Rücklaufleitung zurückströmende Kraftstoff unmittelbar in die Zentralkammer 14 des Filtertopfes 13 gelangt und hier gespeichert wird. Die Zentralkammer 14 übernimmt damit zugleich die Funktion eines Speicherraums für den rücklaufenden Kraftstoff. Der Saugraum 19 ist über eine im Topfboden 131 innerhalb des Bereichs der Zentralkammer 14 ausgebildete zweite Saugraumöffnung 47 mit der Zentralkammer 14 verbunden. Die Saugraumöffnunq 47 weist im Ausführungsbeispiel eine Mehrzahl von auf einem Teilerkreis angeordneten Bohrungen 43 auf. Auf der Unterseite des Topfbodens 131 ist ein Sperr- oder Schließglied 44 angeordnet, das auf der dem Topfboden 131 zugekehrten Oberseite eines im Saugraum 19 einliegenden Auftriebkörpers oder Schwimmers 45 ausgebildet ist. Im vorliegenden Fall wird das Schließglied 44 von einer planen Ringfläche 441 des Schwimmers 45 gebildet, die alle Bohrungen 43 abzudecken vermag. Ist der Saugraum 19 mit Kraftstoff gefüllt, so wird der Schwimmer 45 von der Auftriebskraft gegen die Unterseite des Topfbodens 131 gedrückt und schlieSt die Bohrungen 43 ab. Sinkt der Kraftstoffspiegel im Saugraum 19 unter das Niveau der ersten Saugraumöffnung 20 ab, so fällt der Schwimmer 45 vom Topfboden 131 ab, und Kraftstoff kann aus der Zentralkammer 14 über die freigegebenen Bohrungen 43 in den Saugraum 19 einströmen. Ein solches Absinken des Kraftstoffniveaus im Saugraum 19 tritt insbesondere bei geringem Kraftstoffvolumen im Vorratstank 10 bei Kurvenfahrten auf, wo der Tankboden 102 geneigt wird und Kraftstoff aus dem Saugraum 19 über die erste Saugraumöffnung 20 abfließt. Durch den nunmehr aus der Zentralkammer 14 in den Saugraum 19 fließenden Kraftstoff bleibt der Saugstutzen 26 der Förderpumpe 22 weiterhin in einem Kraftstoffvolumen eingetaucht, so daß die Brennkraftmaschine weiter ungestört mit Kraftstoff versorgt wird. Der Filtertopf 13 und der Filterdeckel 30 werden bevorzugt als Fließpreß-, Druckguß- oder Spritzteil aus Kunststoff oder Leichtmetall, vorzugsweise Aluminium, hergestellt.

Bei einem zweiten Ausführungsbeispiel gemäß den Figuren 2 und 3 ist der Schwimmer 45 zusätzlich zu seiner Auftriebskraft durch eine Anpreßvorrichtung 65 aus einer Tellerfeder 49 und einer Druckplatte 50 belastet. Die Tellerfeder 49 stützt sich einerseits am Boden der Kappe 18 und damit am Tankboden 102 und andererseits an der Druckplatte 50 ab, die mit dem Schwimmer 45 zusammenwirkt. Diese Druckplatte 50 ist scheibenförmig ausgebildet, entspricht in ihrem Durchmesser dem des Schwimmers 45 und weist mehrere durchgehende Ausnehmungen 51 auf. Die Ausnehmungen 51 können beispielsweise zueinander beabstandete Bohrungen sein, deren Mittelpunkte auf einem zum Zentrum der Druckplatte 50 konzentrischen Kreis liegen. Der Druchmesser dieses konzentrischen Kreises ist auf die exzentrische Lage des Saugstutzens 26 zur Pumpenlängsachse abgestimmt, so daß wenigstens eine der Ausnehmungen 51 mit dem Einlaß 24 der Förderpumpe 22 fluchtet, um einen möglichst ungehinderten Kraftstoffluß vom Saugraum 19 zum Saugstutzen 26 zu ermöglichen. Die Druckplatte 50 weist auf ihrer der Förderpumpe 22 zugewandten Seite einen zentrisch angeordneten Stößel 52 auf, der an seinem freien Ende mit einem Kolben 53 endet. Der Stößel 52 und der Kolben 53 liegen koaxial zur Antriebswelle 54 der Förderpumpe 22. Diese Antriebswelle 54 ist im Pumpengehäuse mittels Radiallagern 55 und Axiallagern 56 drehbar geführt. Im Bereich zwischen dem tankbodenseitigen Radiallager 55 und dem entsprechenden Axiallager 56 trägt die Antriebswelle 54 eine Flügelscheibe 57, die den Kraftstoff von der dem Saugstutzen 26 zugewandten Saugseite 58 unter Aufbau des Förderdrucks zu einer Druckseite 59 fördert. Die Druckseite 59 ist über eine Nut 60 mit einem Zylinder 61 verbunden, in dem der Kolben 53 der Druckplatte 50 verschiebbar geführt ist.

Im Abstellfall eines mit diesem Förderaggregat ausgestatteten Fahrzeugs, d.h. beim Stillstand der Förderpumpe 22 bedeutet dies, daß der Zylinder 61 drucklos ist, wodurch die Druckplatte 50 von der Kraft der Tellerfeder 49 gegen den Schwimmer 45 und dieser damit zusätzlich zu seiner Auftriebskraft gegen den Topfboden 131 gedrückt wird. Die Bohrungen 43, die den Saugraum 19 mit der Zentralkammer 14 verbinden, in der ein Kraftstoffvorrat gepuffert ist, sind zuverlässig verschlossen. Selbst bei einer geneigten Position des Fahrzeugs, beispielsweise beim Abstellen am Berg, führt ein Leerlaufen des Saugraums 19 über die Saugraumöffnung 20 und damit einhergehend ein Entfall der Auftriebskraft für den Schwimmer 45 nicht zum Freigeben der Bohrungen 43 durch die der Inhalt der Zentralkammer 14 zum Vorratsbehälter 10 hin abfließen könnte. Dies ist zu verhindern, weil es sonst bei geringem Tankinhalt im Extremfall zu einer Unterbrechung der Kraftstoffversorgung und damit zu Start- bzw. Betriebsstörungen des Fahrzeugs kommen kann.

Beim Anlassen des Fahrzeugmotors wird durch den Betrieb der Förderpumpe 22 im Zylinder 61 ein Druck aufgebaut, der auf den Kolben 53 entgegegen der Kraft der Tellerfeder 49 einwirkt. Wie Figur 3 zeigt, wird über den Stößel 52 dadurch die Druckplatte 50 vom Schwimmer 45 abgehoben, so daß dieser seine zuvor erläuterte Steuerungsfunktion für die Bohrungen 43 unbeeinflußt erfüllen kann.

Um zu verhindern, daß die Tellerfeder 49 durch den Kolben 53 und den Stößel 52 plan gegen die Bodenfläche der Kappe 18 gedrückt wird, was ein unerwünschtes Anhaften der Anpreßvorrichtung 65 an der Kappe 18 zur Folge hätte, ist an der Bodenfläche der Kappe 18 wenigstens eine der Tellerfedern 49 zugewandte Noppe 62 vorgesehen. Diese Noppe 62 stellt zwischen der Anpreßvorrichtung 65 und der Bodenfläche der Kappe 18 einen kraftstoffbefüllten Spalt 63 sicher, der die bestimmungsgemäße Funktion der Anpreßvorrichtung 65 gewährleistet.

## Patentansprüche

1. Förderaggregat zum Fördern von Kraftstoff aus einem Vorratstank (10), insbesondere für Brennkraftmaschinen, mit einem, eine Zentralkammer (14) und eine diese umschließende Ringkammer (15) aufweisenden Filtertopf (13), mit einem die Ringkammer (15) stirnseitig verschließenden Filterdeckel (30), der einen Zulaufkanal (36) zu und einen von einem Ablaufstutzen (40) umschlossenen Ablaufkanal (37) von der Ringkammer (15) enthält, mit einer in der Zentralkammer (14) eingesetzten elektrischen Kraftstoff-Förderpumpe (22), die ein Gehäuse (23) mit Pumpenein- und -auslaß (24, 25) aufweist, wobei der Pumpeneinlaß (24) mit einem an der Gehäusestirnseite angeordneten, durch eine Öffnung (46) im Topfboden (131) hindurch in einen Saugraum (19) hineinragenden Saugstutzen (26) in Verbindung steht und der lichte Durchmesser der Zentralkammer (14) größer ist als der Außendurchmesser des Gehäuses (23) der Förderpumpe (22), wobei an der von dem Saugstutzen (26) abgekehrten Stirnseite des Gehäuses (23) ein axial vorstehender Druckstutzen (27) und am Filterdeckel (30) eine mit dem Zulaufkanal (36) in Verbindung stehende Aufsteckkappe (38) ausgebildet ist, die den Druckstutzen (27) übergreift und wobei zwischen den Druckstutzen (27) und der Aufsteckkappe (38) einerseits und dem Begrenzungsrand der Öffnung (46) im Topfboden (131) und dem Saugstutzen (26) andererseits je eine Hülse (39) bzw. (28) aus elastischem Material einliegt.

2. Förderaggregat nach Anspruch 1, **dadurch gekennzeichnet, daß** die topfbodenseitige Hülse (28) einen radial über die Hülse (28) einstückig vorstehenden Stirnflansch (281) trägt, der zwischen dem Topfboden (131) des Filtertopfes (13) und der diesem zugekehrten Stirnseite des Gehäuses (23) einliegt.

3. Förderaggregat nach Anspruch 1 oder 2, **dadurch gekennzeichnet, daß** die druckstutzenseitige Hülse (39) einen radial über die Hülse (39) einstückig vorstehenden Stirnflansch (391) trägt, der zwischen der ringförmigen Stirnseite der Aufsteckkappe (38) und der dieser zugekehrten Stirnseite des Gehäuses (23) der Förderpumpe (22) einliegt.

4. Förderaggregat nach einem der Ansprüche 1 bis 3, **dadurch gekennzeichnet, daß** der Filterdeckel (30) einen an seiner Unterseite axial vorstehenden, ringförmigen Schließkragen (31) mit einer der lichten Weite der Ringkammer (15) entsprechenden Radialbreite aufweist, der stirnseitig in die Ringkammer (15) unter Zwischenlage jeweils einer Ringdichtung (32, 33) zur äußeren und inneren Ringwand (151, 152) der Ringkammer (15) eingesetzt und mit dem Filtertopf (13) fest, vorzugsweise durch Umbördelung der äußeren und inneren Ringwand (151, 152) verbunden ist, und daß die im Filterdeckel (30) ausgebildeten Kanäle (36, 37) in der die Ringkammer (15) vollständig überdeckenden Schließfläche (311) des Schließkragens (31) münden.

5. Förderaggregat nach Anspruch 4, **dadurch gekennzeichnet, daß** auf der Schließfläche (311) des Schließkragens (31) Abstützelemente (312) radial vorstehend, vorzugsweise einstückig, angeordnet ist, die sich an die Stirnseite eines in die Ringkammer (15) eingesetzten, ringförmigen Hauptfilters (29) andrücken.

6. Förderaggregat nach Anspruch 4 oder 5, **dadurch gekennzeichnet, daß** der Filterdeckel (30) im Bereich der Zentralkammer (14) offen ist, zumindest eine Zugangsöffnung zur Zentralkammer (14) aufweist.

7. Förderaggregat nach einem der Ansprüche 4 - 6, **dadurch gekennzeichnet, daß** der Filterdeckel (30) mit Ablaufstutzen (40), Aufsteckkappe (38), Ablaufkanal (37), Zulaufkanal (36) und Schließkragen (31) einstückig als Fließpreß-, Druckgußoder Spritzteil hergestellt ist.

8. Förderaggregat nach einem der Ansprüche 1 - 7, **dadurch gekennzeichnet, daß** der Filtertopf (13) mit Topfboden (131) und innerer Ringkammerwand (152) einstückig als Fließpreß-, Druckguß- oder Spritzteil hergestellt ist.

9. Förderaggregat nach einem der Ansprüche 6 - 8, **dadurch gekennzeichnet, daß** der Filterdeckel (30) auf seiner vom Filtertopf (13) abgekehrten Stirnseite einen zylindrischen Wandbereich (301) aufweist, der eine kreisförmige Anschlußöffnung (34) für einen eine Einsetzöffnung (11) im Vorratstank (10) verschließenden Tankflansch (12) umgrenzt.

10. Förderaggregat nach einem der Ansprüche 1 - 9, **dadurch gekennzeichnet, daß** der Saugraum (19) eine erste Saugraumöffnung (20) zum Einströmen von Kraftstoff aus dem Vorratstank (10) aufweist und über eine zweite Saugraumöffnung (47) mit der Zentralkammer (14) des Filtertopfes (13) in Verbindung steht, daß im Saugraum (19) ein die zweite Saugraumöffnung (47) verschließendes Schließglied (44) angeordnet ist, das die zweite Saugraumöffnung (47) freigibt, wenn der Kraftstoffspiegel im Saugraum (19) unter ein vorgegebenes Niveau absinkt und daß in der Zentralkammer (14) eine Rücklaufleitung mündet, die zum Vorratsbehälter (10) zurückfließenden Kraftstoff führt.

11. Förderaggregat nach Anspruch 10, **dadurch gekennzeichnet, daß** der Pumpenauslaß (25) der Förderpumpe (22) direkt an dem im Filterdeckel (30) ausgebildeten Zulaufkanal (36) zur Ringkammer (15) angeschlossen ist.

12. Förderaggregat nach einem der Ansprüche 10 oder 11, **dadurch gekennzeichnet, daß** das Schließglied (44) mit einer Anpreßvorrichtung (65) zusammenwirkt.

13. Förderaggregat nach Anspruch 12, **dadurch gekennzeichnet, daß** die Anpreßvorrichtung (65) aus einer Tellerfeder (49) und einer daran anliegenden Druckplatte (50) mit einem Kolben (53) besteht und daß der Kolben (53) in einem hydraulisch beaufschlagbaren Zylinder (61) verschiebbar geführt ist.

14. Förderaggregat nach Anspruch 13, **dadurch gekennzeichnet, daß** der Zylinder (61) einstückig im Gehäuse der Kraftstofförderpumpe (22) ausgebildet ist und mittels Druckmittelverbindungen (60) mit der Saug- bzw. der Druckseite der Kraftstofförderpumpe (22) verbindbar ist.

15. Förderaggregat nach einem der Ansprüche 12 bis 14, **dadurch gekennzeichnet, daß** die Anpreßvorrichtung (65) das Schließglied (44) im Ruhezustand des Förderagggregats in Richtung seiner Schließstellung belastet.

16. Förderaggregat nach einem der Ansprüche 10 bis 15, **dadurch gekennzeichnet, daß** der Saugraum (19) von einer auf der Unterseite des Topfbodens (131) des Filtertopfes (13) aufgesetzten, dosenförmigen Kappe (18) umschlossen ist, daß die erste Saugraumöffnung (20) nahe dem Topfboden (131) in der Kappe (18) und die zweite Saugraumöffnung (47) in dem die Zentralkammer (14) überspannenden Bereich des Topfbodens (131) ausgebildet ist.

17. Förderaggregat nach Anspruch 16, **dadurch gekennzeichnet, daß** auf der Unterseite des Topfbodens (131) des Filtertopfes (13) ein die Kappe (18) koaxial umgebender Aufsetzstutzen (16) zum Aufsetzen des Filtertopfes (13) auf den Tankboden (102) des Vorratstanks (10) axial vorsteht und daß zwischen der Kappe (18) und dem Aufsetzstutzen (16) ein einen zwischen Kappe (18) und Aufsetzstutzen (16) vorhandenen Ringraum überdeckendes Filtergewebe aufgespannt ist.

18. Förderaggregat nach einem der Ansprüche 10 - 17, **dadurch gekennzeichnet, daß** das Schließglied (44) an einem im Saugraum (19) einliegenden Auftriebskörper (45) ausgebildet ist, der unter Auftriebskraft an der Unterseite des Topfbodens (131) anliegt.

19. Förderaggregat nach Anspruch 18, **dadurch gekennzeichnet, daß** das Schließglied (44) von einer auf der Oberseite des Auftriebskörpers (45) ausgebildeten Dichtfläche (441) gebildet ist.

20. Förderaggregat nach Anspruch 19, **dadurch gekennzeichnet, daß** die zweite Saugraumöffnung (47) eine Mehrzahl von vorzugsweise auf einem Teilerkreis angeordneten, voneinander beabstandeten Bohrungen (43) aufweist, die in den Topfboden (131) eingebracht und von der Dichtfläche (441) auf dem Auftriebskörper (45) abdeckbar sind.

21. Vorratstank mit einem Förderaggregat nach einem der Ansprüche 1 bis 20 und mit einer in der Tankwand (101) angeordneten Einsetzöffnung (11), mit einem die Einsetzöffnung (11) verschließenden Tankflansch (12), der einen an dem Ablaufstutzen (40) angeschlossenen Anschlußstutzen für eine Kraftstofförderleitung und einen Anschlußstutzen für eine Kraftstoffrücklaufleitung aufweist, **dadurch gekennzeichnet, daß** der Tankflansch (12) den Filterdeckel (30) auf dessen vom Filtertopf (13) abgekehrten Stirnseite hermetisch verschließt und ein mit dem Anschlußstutzen für die Förderleitung in Verbindung stehendes Anschlußrohr (41) aufweist, das auf der Flanschunterseite axial vorsteht und unter Zwischenlage einer Ringdichtung (42) auf den Ablaufstutzen (40) aufgeschoben ist und daß der Anschlußstutzen für die Rücklaufleitung in einem auf der Unterseite des Tankflansches (12) frei auslaufenden Einlaufrohr (48) aufweist.

22. Vorratstank mit einem Förderaggregat nach Anspruch (21), **dadurch gekennzeichnet, daß** der Tankflansch (12) einen den zylindrischen Wandungsbereich (301) des Filterdeckels (30) übergreifenden Verschlußstutzen (121) aufweist, der an seiner Unterseite axial vorsteht, und daß zwischen der Außenseite des zylindrischen Wandbereichs (301) und der Innenwand des Verschlußstutzens (121) eine Dichtung (35) eingesetzt ist.

## Claims

1. Feed assembly for feeding fuel out of a storage tank (10), in particular for internal combustion engines, with a filter bowl (13) having a central chamber (14) and an annular chamber (15) surrounding the latter, with a filter cover (30) which closes the annular chamber (15) on the end face and which contains an inflow duct (36) to the annular chamber (15) and an outflow duct (37) from the annular chamber (15), said outflow duct being surrounded by an outflow connection piece (40), and with an electric fuel feed pump (22) which is inserted in the central chamber (14) and has a casing (23) with a pump inlet and outlet (24, 25), the pump inlet (24) being connected to a suction connection piece (26) arranged on the casing end face and projecting through an orifice (46) in the bowl bottom (131) into a suction space (19), and the clear diameter of the central chamber (14) being larger than the outside diameter of the casing (23) of the feed pump (22), there being formed, on that end face of the casing (23) which faces away from the suction connection piece (26), an axially projecting delivery connection piece (27) and, on the filter cover (30), a slip-on cap (38) which is connected to the inflow duct (36) and engages over the delivery connection piece (27), and a sleeve (39) and (28) made of elastic material being seated in each case between the delivery connection piece (27) and the slip-on cap (38), on the one hand, and the boundary edge of the orifice (46) in the bowl bottom (131) and the suction connection piece (26), on the other hand.

2. Feed assembly according to Claim 1, **characterized in that** the sleeve (28) located on the bowl bottom side carries an end flange (281) which projects radially in one piece beyond the sleeve (28) and which is seated between the bowl bottom (131) of the filter bowl (13) and that end face of the casing (23) which faces said bowl bottom.

3. Feed assembly according to Claim 1 or 2, **characterized in that** the sleeve (39) located on the delivery-connection-piece side carries an end flange (391) which projects radially in one piece beyond the sleeve (39) and which is seated between the annular end face of the slip-on cap (38) and that end face of the casing (23) of the feed pump (22) which faces said slip-on cap.

4. Feed assembly according to one of Claims 1 to 3, **characterized in that** the filter cover (30) has an annular closing collar (31) which projects axially on the underside of the latter and has a radial width corresponding to the clear width of the annular chamber (15) and which is inserted on the end face into the annular chamber (15), an annular seal (32, 33) being interposed in each case with respect of the outer and inner annular walls (151, 152) of the annular chamber (15), and is firmly connected to the filter bowl (13), preferably by virtue of the crimping of the outer and inner annular walls (151, 152), and **in that** the ducts (36, 37) formed in the filter cover (30) issue in the closing surface (311) of the closing collar (31), said closing surface completely covering the annular chamber (15).

5. Feed assembly according to Claim 4, **characterized in that** supporting elements (312) are arranged so as to project radially, preferably in one piece, on the closing surface (311) of the closing collar (31) and are pressed onto the end face of an annular main filter (29) inserted into the annular chamber (15).

6. Feed assembly according to Claim 4 or 5, **characterized in that** the filter cover (30) is open in the region of the central chamber (14), has at least one access orifice to the central chamber (14).

7. Feed assembly according to one of Claims 4-6, **characterized in that** the filter cover (30), together with the outflow connection piece (40), slip-on cap (38), outflow duct (37), inflow duct (36) and closing collar (31), is produced in one piece as an extrusion, a diecasting or an injection moulding.

8. Feed assembly according to one of Claims 1-7, **characterized in that** the filter bowl (13), together with the bowl bottom (131) and the inner annular-chamber wall (152), is produced in one piece as an extrusion, a diecasting or an injection moulding.

9. Feed assembly according to one of Claims 6-8, **characterized in that** the filter cover (30) has, on its end face facing away from the filter bowl (13), a cylindrical wall region (301) which delimits a circular connecting orifice (34) for a tank flange (12) closing an insertion orifice (11) in the storage tank (10).

10. Feed assembly according to one of Claims 1-9, **characterized in that** the suction space (19) has a first suction-space orifice (20) for the inflow of fuel from the storage tank (10) and is connected to the central chamber (14) of the filter bowl (13) via a second suction-space orifice (47), **in that** the suction space (19) has arranged in it a closing member (44) which closes the second suction-space orifice (47) and which opens the second suction-space orifice (47) when the fuel level in the suction space (19) falls below a predetermined level, and **in that** a return line leading fuel flowing back to the storage tank (10) issues in the central chamber (14).

11. Feed assembly according to Claim 10, **characterized in that** the pump outlet (25) of the feed pump (22) is connected directly to the inflow duct (36) to the annular chamber (15), said inflow duct being formed in the filter cover (30).

12. Feed assembly according to one of Claims 10 and 11, **characterized in that** the closing member (44) cooperates with a pressing device (65).

13. Feed assembly according to Claim 12, **characterized in that** the pressing device (65) consists of a cup spring (49) and of a thrust plate (50) bearing on the latter and having a piston (53), and **in that** the piston (53) is guided displaceably in a cylinder (61) capable of being acted upon hydraulically.

14. Feed assembly according to Claim 13, **characterized in that** the cylinder (61) is formed in one piece in the casing of the fuel feed pump (22) and is connectable by means of pressure-medium connections (60) to the suction side and the delivery side of the fuel feed pump (22).

15. Feed assembly according to one of Claims 12 to 14, **characterized in that** the pressing device (65) loads the closing member (44) in the direction of its closing position when the feed assembly is in the state of rest.

16. Feed assembly according to one of Claims 10 to 15, **characterized in that** the suction space (19) is surrounded by a can-shaped cap (18) placed on the underside of the bowl bottom (131) of the filter bowl (13), and **in that** the first suction-space orifice (20) is formed, near the bowl bottom (131), in the cap (18), and the second suction-space orifice (47) is formed **in that** region of the bowl bottom (131) which spans the central chamber (14).

17. Feed assembly according to Claim 16, **characterized in that** a place-on connection piece (16), coaxially surrounding the cap (18), for placing the filter bowl (13) onto the tank bottom (102) of the storage tank (10) projects axially on the underside of the bowl bottom (131) of the filter bowl (13), and **in that** a filter fabric covering an annular space present between the cap (18) and the place-on connection piece (16) is stretched between the cap (18) and the place-on connection piece (16).

18. Feed assembly according to one of Claims 10-17, **characterized in that** the closing member (44) is formed on a lift body (45) which is seated in the suction space (19) and which bears under lifting force on the underside of the bowl bottom (131).

19. Feed assembly according to Claim 18, **characterized in that** the closing member (44) is formed by a sealing surface (441) formed on the top side of the lift body (45).

20. Feed assembly according to Claim 19, **characterized in that** the second suction-space orifice (47) has a plurality of bores (43) spaced from one another, which are arranged preferably on a reference circle, are introduced into the bowl bottom (131) and are capable of being covered by the sealing surface (441) on the lift body (45).

21. Storage tank with a feed assembly according to one of Claims 1 to 20 and with an insertion orifice (11) arranged in the tank wall (101), with a tank flange (12) which closes the insertion orifice (11) and has a connection piece, connected to the outflow connection piece (40), for a fuel feed line and a connection piece for a fuel return line, **characterized in that** the tank flange (12) hermetically closes the filter cover (30) on its end face facing away from the filter bowl (13) and has a connecting tube (41) which is connected to the connection piece for the feed line and which projects axially on the flange underside and is pushed onto the outflow connection piece (40), with an annular seal (42) being interposed, and **in that** the connection piece for the return line has an inflow tube (48) terminating freely on the underside of the tank flange (12).

22. Storage tank with a feed assembly according to Claim 21, **characterized in that** the tank flange (12) has a closing connection piece (121) which engages over the cylindrical wall region (301) of the filter cover (30) and which projects axially on the underside of said tank flange, and **in that** a seal (35) is inserted between the outside of the cylindrical wall region (301) and the inner wall of the closing connection piece (121).

## Revendications

1. Groupe d'alimentation pour alimenter en carburant d'un réservoir (10) notamment un moteur à combustion interne, comprenant un pot de filtre (13) ayant une chambre centrale (14) entourée d'une chambre annulaire (15), un couvercle de filtre (30) fermant la face frontale de la chambre annulaire (15), mais comportant un canal d'alimentation (36) vers cette chambre et un canal d'évacuation (37) entouré par un ajutage de sortie (40) pour la chambre annulaire (15), une pompe électrique (22) d'alimentation en carburant placée dans la chambre centrale (14), cette pompe ayant un boîtier (23) avec une entrée et une sortie de pompe (24, 25), dont l'entrée de pompe (24) est reliée à un ajutage d'aspiration (26) prévu du côté de la face du boîtier, pénétrant dans la chambre d'aspiration (19) à travers une ouverture (46) du fond (131) du pot, le diamètre libre de la chambre centrale libre (14) étant supérieur au diamètre extérieur du boîtier (23) de la pompe d'alimentation (22), la face frontale du boîtier (23) à l'opposé de l'ajutage d'aspiration (26) comporte un ajutage de pression (27) axialement en saillie et sur le couvercle de filtre (30) un capuchon d'enfichage (38) relié au canal d'alimentation (36) vient par-dessus l'ajutage de refoulement (27), et,
entre l'ajutage de refoulement (27) et le capuchon enfiché (38) d'une part et la paroi de limitation de l'ouverture (46) du fond de pot (131) et l'ajutage d'aspiration (26) d'autre part, on a chaque fois un manchon (39, 28) en matière élastique.

2. Groupe d'alimentation selon la revendication 1,
**caractérisé en ce que**
le manchon (28) du côté du fond du pot comporte une bride frontale (281), radiale, débordant du manchon (28) et faisant corps avec celui-ci, cette bride se plaçant entre le fond (131) du pot de filtre (13) et la face frontale du boîtier (23), opposée.

3. Groupe d'alimentation selon la revendication 1 ou 2,
**caractérisé en ce que**
le manchon (39) du côté de l'ajutage de refoulement comporte une bride frontale (391) dépassant radialement par rapport au manchon (39) et faisant corps avec celui-ci, cette bride se situant entre la face frontale annulaire du capuchon enfiché (38) et la face frontale du boîtier (23) de la pompe d'alimentation (22) tournée vers celui-ci.

4. Groupe d'alimentation selon l'une quelconque des revendications 1 à 3,
**caractérisé en ce que**
le couvercle de filtre (30) comporte une collerette de fermeture annulaire (31), dépassant axialement de sa face inférieure, avec une largeur radiale correspondant à la largeur libre de la chambre annulaire (15), ce couvercle étant placé du côté de la paroi frontale dans la chambre annulaire (15) avec interposition chaque fois d'un joint annulaire (32, 33) par rapport à la paroi annulaire extérieure et la paroi annulaire intérieure (151, 152) de la chambre annulaire (15), en étant relié solidairement au pot (13) du filtre de préférence par sertissage de la paroi annulaire extérieure et intérieure (151, 152) et,
les canaux (36, 37) réalisés dans le couvercle de filtre (30) débouchent dans la surface de fermeture (311) de la collerette de fermeture (31) recouvrant complètement la chambre annulaire (15).

5. Groupe d'alimentation selon la revendication 4,
**caractérisé en ce que**
la surface de fermeture (311) de la collerette de fermeture (31) comporte des éléments d'appui (312) radialement en saillie et de préférence réalisés en une seule pièce, qui s'appuient contre la face frontale d'un filtre principal (29), annulaire placé dans la chambre annulaire (15).

6. Groupe d'alimentation selon les revendications 4 ou 5,
**caractérisé en ce que**
le couvercle de filtre (30) est ouvert au niveau de la chambre centrale (14) et comporte au moins un orifice d'accès vers la chambre centrale (14).

7. Groupe d'alimentation selon l'une quelconque des revendications 4 à 6,
**caractérisé en ce que**
le couvercle de filtre (30) est muni d'un ajutage de sortie (40), d'un capuchon d'enfichage (48), d'un canal de sortie (37), d'un canal d'alimentation (36) et d'une collerette de fermeture (31), le tout en une seule pièce par fluage à la presse, coulée sous pression ou comme pièce injectée.

8. Groupe d'alimentation selon l'une quelconque des revendications 1 à 7,
**caractérisé en ce que**
le pot de filtre (13) est réalisé en une seule pièce avec le fond (131) du pot et la paroi annulaire intérieure (152) de la chambre comme pièce obtenue par fluage à la presse, coulée sous pression ou comme pièce injectée.

9. Groupe d'alimentation selon l'une quelconque des revendications 6 à 8,
**caractérisé en ce que**
le couvercle de filtre (30) présente sur sa face frontale à l'opposé du pot (13), une zone de paroi cylindrique (301) qui entoure un orifice de branchement circulaire (34) pour une bride de réservoir (12) fermant un orifice de mise en place (11) dans le réservoir (10).

10. Groupe d'alimentation selon l'une quelconque des revendications 1 à 9,
**caractérisé en ce que**
la chambre d'aspiration (19) comporte un premier orifice d'aspiration (20) pour l'arrivée du carburant à partir du réservoir (10) et par un second orifice d'aspiration (47) qui communique avec la chambre centrale (14) du pot de filtre (13),
la chambre d'aspiration (19) comporte un organe de fermeture (44) qui ferme le second orifice d'aspiration (47), cet organe de fermeture libérant le second orifice d'aspiration (47) si le niveau du carburant dans la chambre d'aspiration (19) descend en dessous d'un niveau prédéterminé, et
une conduite de retour de carburant revenant au réservoir (10) débouche dans la chambre centrale (14).

11. Groupe d'alimentation selon la revendication 10,
**caractérisé en ce que**
la sortie (25) de la pompe d'alimentation (22) est reliée directement au canal d'alimentation (36) de la chambre annulaire (15) dans le couvercle de filtre (30).

12. Groupe d'alimentation selon l'une des revendications 10 ou 11,
**caractérisé en ce que**
l'organe de fermeture (44) coopère avec un dispositif de pression (65).

13. Groupe d'alimentation selon la revendication 12,
**caractérisé en ce que**
le dispositif de pression (65) se compose d'un ressort Belleville (49) et d'un plateau de poussée (50) prévu sur celui-ci, avec un piston (53) et, le piston (53) coulisse dans un cylindre hydraulique (61).

14. Groupe d'alimentation selon la revendication 13,
**caractérisé en ce que**
le cylindre (61) fait corps avec le boîtier de la pompe d'alimentation en carburant (22) et il peut être relié par des liaisons de fluide sous pression (60) au côté d'aspiration ou au côté de refoulement de la pompe d'alimentation en carburant (22).

15. Groupe d'alimentation selon l'une quelconque des revendications 12 à 14,
**caractérisé en ce que**
le dispositif de pression (65) charge l'organe d'obturation (44) au repos du groupe d'alimentation, dans le sens de sa position de fermeture.

16. Groupe d'alimentation selon l'une quelconque des revendications 10 à 15,
**caractérisé en ce que**
la chambre d'aspiration (19) est entourée par un capuchon (18) en forme de boîte rapporté sur le côté inférieur du fond (131) du pot de filtre (13), le premier orifice d'aspiration (20) étant réalisé à proximité du fond (131) du pot dans le capuchon (18) et le second orifice d'aspiration (47) se trouve dans la zone du fond du pot (131) qui correspond à la chambre centrale (14).

17. Groupe d'alimentation selon la revendication 16,
**caractérisé en ce que**
le côté inférieur du fond (131) du pot de filtre (13) comporte un ajutage (16) entourant coaxialement le capuchon (18) pour recevoir le pot de filtre (13) sur le fond (18) du réservoir (10), cet ajutage étant axialement en saillie, et
entre le capuchon (18) et l'ajutage (16), on fixe un tissu de filtre qui recouvre l'intervalle annulaire compris entre le capuchon (18) et l'ajutage (16).

18. Groupe d'alimentation selon l'une quelconque des revendications 10 à 17,
**caractérisé en ce que**
l'organe d'obturation (44) est réalisé sur un organe soumis à une poussée ascensionnelle (45), placé dans la chambre d'aspiration (19), et qui s'applique sous l'effet de la force ascensionnelle contre la face inférieure du fond (131) du pot.

19. Groupe d'alimentation selon la revendication 18,
**caractérisé en ce que**
l'organe d'obturation (44) est formé par une surface d'étanchéité (441) réalisée sur la face supérieure de l'organe (45) soumis à une poussée ascensionnelle.

20. Groupe d'alimentation selon la revendication 19,
**caractérisé en ce que**
le second orifice d'aspiration (47) se compose de plusieurs perçages (43), distants les uns des autres en étant répartis de préférence sur un cercle primitif, ces perçages étant réalisés dans le fond (131) du pot et sont couverts par la surface d'étanchéité (441) de l'organe (45) soumis à une poussée ascensionnelle.

21. Réservoir comportant un groupe d'alimentation selon l'une quelconque des revendications 1 à 20, et un orifice de mise en place (11) dans la paroi (101) du réservoir, une bride de réservoir (12) fermant l'orifice de mise en place (11), cette bride ayant un ajutage de branchement relié à l'ajutage de sortie (40) d'une conduite d'alimentation en carburant et un ajutage de branchement pour la conduite de retour de carburant,
**caractérisé en ce que**
la bride de réservoir (12) ferme hermétiquement le couvercle de filtre (30) au niveau de sa face frontale opposée à celle du pot de filtre (13) et comporte un tube de branchement (41) communiquant avec l'ajutage de branchement pour la conduite d'alimentation, ce tube étant axialement en saillie de la face inférieure de la bride et il s'engage sur l'ajutage de sortie (40) avec interposition d'un joint annulaire (42), et
l'ajutage de branchement de la conduite de retour comporte un tube d'entrée (48) libre sur la face inférieure de la bride de réservoir (12).

22. Réservoir comportant un groupe d'alimentation selon la revendication 11,
**caractérisé en ce que**
la bride de réservoir (12) comporte un ajutage de fermeture (121) qui chevauche la zone de paroi cylindrique (301) du couvercle de filtre (30), cet ajutage étant axialement en saillie par rapport à la face inférieure et, entre le côté extérieur de la zone de paroi cylindrique (301) et la paroi intérieure de l'ajutage de fermeture (121), on prévoit un joint (35).
